Europäisches Patentamt

European Patent Office

Office européen des brevets

(11) Publication number: **0 416 876 A2**

# EUROPEAN PATENT APPLICATION

(21) Application number: 90309674.1

(51) Int. Cl.5: **H04N 9/04**

(22) Date of filing: 04.09.90

(30) Priority: 08.09.89 JP 233213/89
22.11.89 JP 304107/89
30.11.89 JP 311169/89

(43) Date of publication of application:
**13.03.91 Bulletin 91/11**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Yoneyama, Masayuki**
**28-1-301, Nyoze-cho**
**Takatsuku-shi, Osaka-fu 569(JP)**
Inventor: **Kuga, Ryuichiro**
**6492-133, Takayama-cho**
**Ikoma-shi, Nara-ken 630-01(JP)**
Inventor: **Yamane, Yosuke**
**5-103, Fujita-cho**
**Moriguchi-shi, Osaka-fu 570(JP)**

(74) Representative: **Crawford, Andrew Birkby et al**
**A.A. THORNTON & CO. Northumberland**
**House 303-306 High Holborn**
**London WC1V 7LE(GB)**

(54) Solid state imaging apparatus.

(57) By selectively low-pass filtering a specific optical frequency component only using a selective optical low-pass filter, an imaging apparatus can be realized which has no generation of false signal and good color reproducibility and high resolution as well as is easy to manufacture and economical.

Fig. 1

EP 0 416 876 A2

# SOLID STATE IMAGING APPARATUS

## BACKGROUND OF THE INVENTION

### 1. Field of the Invention

This invention relates to a solid state imaging apparatus for use in video camera or the like having a photo-electric converter.

### 2. Description of the Prior Art

Recently, the solid state imaging apparatus has been widely used for an imaging apparatus of video camera or the like. The solid state imaging apparatus advantageously features that it can be made compact, produces a low afterimage as well as can provide a picture screen with a uniform spatial resolution. However, with the surge of further improving the resolution of EDTV, HDTV or the like, problems such that the sensitivity can be reduced accompanying with the trend to make a higher pixel arrangement of solid state imaging device and how the higher pixel arrangement can be co-existed with good color reproducibility have been pointed out. In conventional solid state imaging apparatus, an incident light inputted through a taking lens is removed its unnecessary frequency components by means of a quartz optical low-pass filter. Next, the infrared component can be removed by means of an infrared cut filter. After passing through a color filter, the incident light thus processed is subjected to a photoelectric conversion by a solid state imaging device such as, for example, CCD and outputted to an output terminal. In this case, the pixel arrangement of the color filter uses, for example, the Beyer arrangement in which pixels for outputting green signal are arranged in an oblique lattice pattern and pixels for outputting red signal and pixels for outputting blue signal are arranged so that the pixels for outputting green signal are disposed between the red and blue pixels. In the Beyer arrangement, description is made in U. S. Patent, 3,971, 065(1976). The Beyer arrangement is advantageous in that each of red, blue and green colors can be directly taken out through the primary color filter of each pixel and good color reproducibility can be attained. However, the spatial arrangement of the same color filters is that, for example, the pixel for outputting red signal and the pixel for outputting blue signal respectively are arranged with a space of one pixel, so that the frequency band of an optical low-pass filter for removing a false signal is unavoidably narrowed and at the same time, the luminance signal band governed by the green signal becomes unavoidably narrow, which have been pointed out as problems to be overcome previously. That is, if the horizonal Nyquist frequency is expressed as fH and the vertical Nyquist frequency as fV, the horizontal frequency band and the vertical frequency band on the two-dimensional frequency plane of green, red and blue signals obtained from a solid state imaging apparatus using the Beyer arrangement are limited to fH/2 and fV/2, respectively. In addition, as the optical low-pass filter, Mr. Taunsent, an American researcher, has proposed to use a phase grating in his recent report (see, "Spatial-Frequency Filter for a Kell-Type Color Camera", Applied Optics, Vol. 11, No. 11, Nov. 1972). However, he does not refer to the improvement of picture quality by positive use of the color selectivity of phase gratings in his report shown above.

## SUMMARY OF THE INVENTION

An object of this invention is to provide an imaging apparatus which effectively uses limited number of pixels of an imaging device to attain the highest possible resolution.

Another object of this invention is to provide an imaging apparatus capable of providing higher resolution and yet good color reproductivity.

Further another object of this invention is to provide an imaging apparatus not generating any false signal disadvantageously obtained particularly when a single plate image taking system is used.

Still further another object of this invention is to provide an imaging apparatus for consumer use which is easy to manufacture and economical.

In order to attain the above-mentioned objects, an imaging apparatus of this invention comprises an imaging lens, a color selection optical low-pass filter, an infrared cut filter, a color filter and a solid state photo-electric converter.

An incident light inputted through the imaging lens is subjected to the low-pass filtering process selectively for specific frequency components only by the color selection optical low-pass filter and then passed through the infrared cut filter to remove an infrared component therefrom. The incident light thus processed is inputted via a color filter which passes specific color lights only to a solid state photo-electric converter to be subjected to photo-electric conversion and outputted to an output terminal as an electric signal.

The color selection low-pass filter is made of, for example, a phase filter, which is an optical element capable of performing the low-pass filtering process selectively in accordance with the wavelength of an incident light. With the structure as above, the color filter uses a primary color filter whose pixel arrangement uses, for example, the Beyer arrangement. The use of primary color filter makes it possible to improve the color reproducibility as well as to attain no generation of false signal because any color moiré pattern can be selectively removed by means of the color selection optical low-pass filter. In addition, if the color moiré is removed, the frequency characteristic of signal components contributing to the luminance signal is not deteriorated, so that high resolution can be obtained. Only one piece of an imaging device to be used results in a low cost and no need to use the spectral system and to perform any spatial process such as the pixel slide or the like which are necessary for the multi-plate imaging system. As a result, an imaging apparatus of this invention is easy to manufacture and hopeful as an imaging apparatus for the consumer use.

BRIEF DESCRIPTION OF THE DRAWINGS

Fig. 1 is a perspective view of a solid state imaging apparatus of an embodiment of this invention.

Fig. 2 structurally shows an example of pixel arrangement of a color filter 4 in Fig. 1.

Figs. 3 (A), (B), (C) and (D) each shows an example of a color selection low-pass filter 2 in Fig. 1 looked from the direction perpendicular to the optical axis.

Fig. 4 shows a two-dimensional frequency characteristic showing the frequency band of each of green signal, red signal and blue signal obtained in this invention.

Fig. 5 is a block diagram of a solid state imaging apparatus of the prior art.

Fig. 6 structurally shows an example of pixel arrangement of a color filter of the prior art.

Fig. 7 shows a two-dimensional frequency characteristic showing the frequency band of each of green signal, red signal and blue signal obtained in a solid state imaging apparatus of the prior art.

Fig. 8 is a block diagram of a solid state imaging apparatus of another embodiment of this invention.

Figs. 9, 10 and 11 each shows an example of the pixel arrangement of a color filter to be used in a solid state imaging apparatus of this invention.

Fig. 12 shows an example of the arrangement of optical devices of a solid state imaging apparatus of this invention.

Fig. 13 shows an another example of the arrangement of optical devices of a solid state imaging apparatus of this invention.

Fig. 14 shows further another example of the arrangement of optical devices of a solid state imaging apparatus of this invention.

Fig. 15 is a block diagram of a circuit system including a solid state imaging apparatus of this invention.

Fig. 16 shows an example of realizing a color selection low-pass filter using an optical waveguide.

Fig. 17 shows an example of realizing a color selection low-pass filter using an optical diffusion process function.

DESCRIPTION OF THE PREFERRED EMBODIMENTS

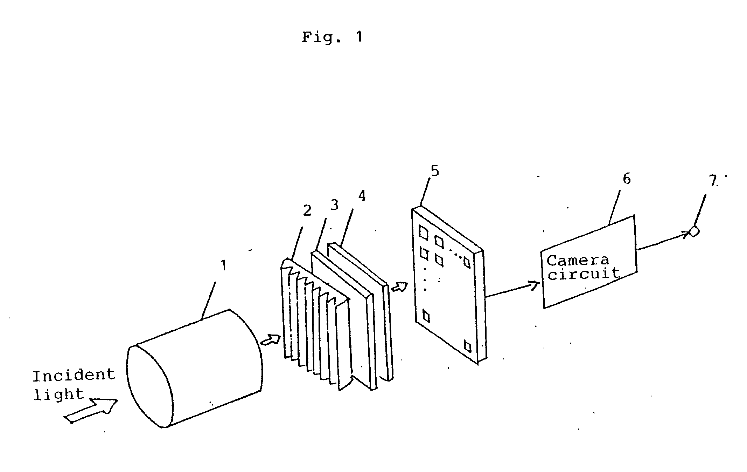

Fig. 1 is a block diagram showing a solid state imaging apparatus according to an embodiment of this invention.

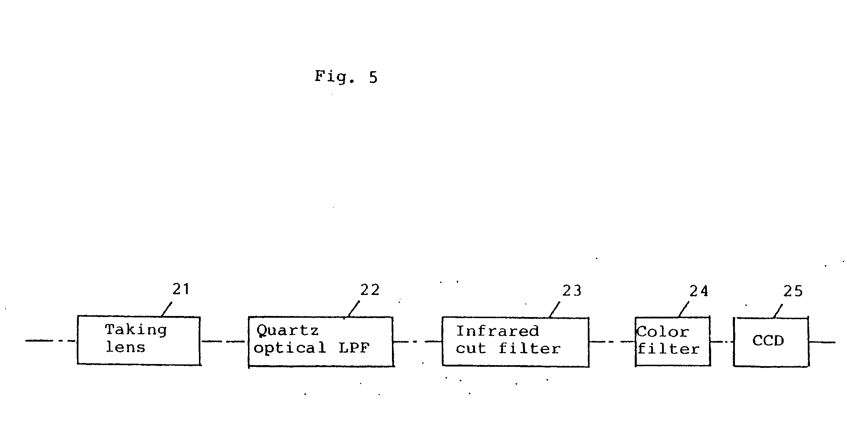

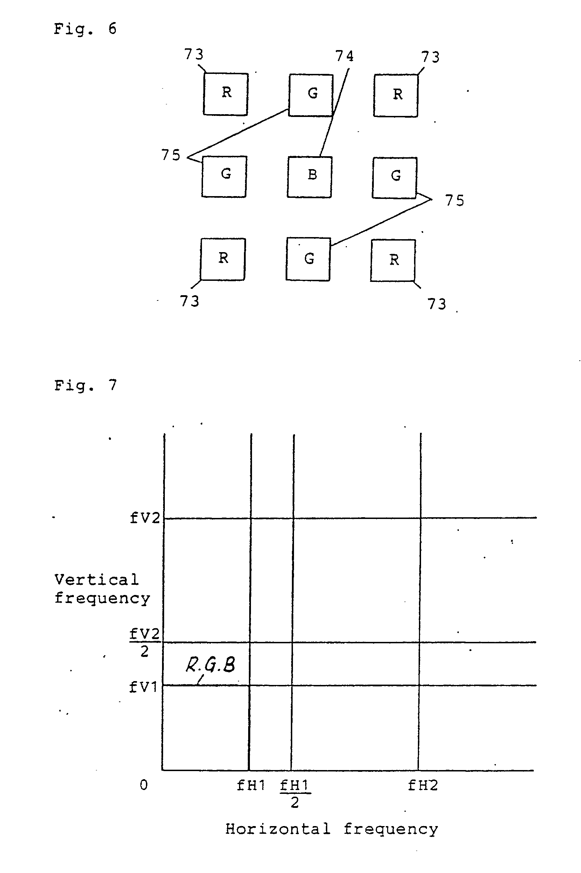

In which, an incident light inputted through a taking lens 1 is subjected to the low-pass filtering process by a selective optical low-pass filter 2 selectively for specific optical frequency components only, and an infrared cut filter 3 removes an infrared component therefrom. Then, the incident light thus processed is inputted via a color filter 4 for passing specific color lights only to a solid state imaging device 5 (for example, CCD) to be photoelectrically converted, then inputted to a camera circuit 6 to achieve processes such as the gamma correction, aperture correction, white balance, chip process, knee process and the like and outputted to an output terminal 7. As shown in Fig. 5, in this case, with a conventional solid state imaging apparatus, an incident light through a taking lens 21 is subjected to the low-pass filtering process for its high frequency components by a quartz optical low-pass filter 22 and removed its infrared component by means of an infrared cut filter 23. Then, the incident light thus processed is inputted through a color filter 24 to a solid state imaging device 25 to be subjected to the photo-electric conversion. Pixel arrangement of the color filter 24 of the prior art becomes as, for example, that shown in Fig. 6. In Fig. 6, the pixel arrangement of color filter has adopted the Beyer arrangement that green filters 75 are arranged in an oblique lattice pattern and red filters 73 and blue filters 74 are alternately arranged with the green filter 75 disposed therebetween. In this case, if the horizontal Nyquist frequency and the vertical Nyquist frequency of an pixel are expressed as fH2 and fV2, respectively, moiré patterns of red and blue colors are generated at (fH2, 0) and (0, fV2). The color moiré patterns thus generated are removed by band-limiting through the quartz optical low-pass filter 22 the horizontal and vertical frequencies on the two-dimensional frequency plane of each of the obtained signals to a value of fH1 which is below fH2/2 and a value of fV1 which is below fV2/2, respectively, which means that the solid state imaging device 25 has not yet made the best use of pixels of the number that it has originally.

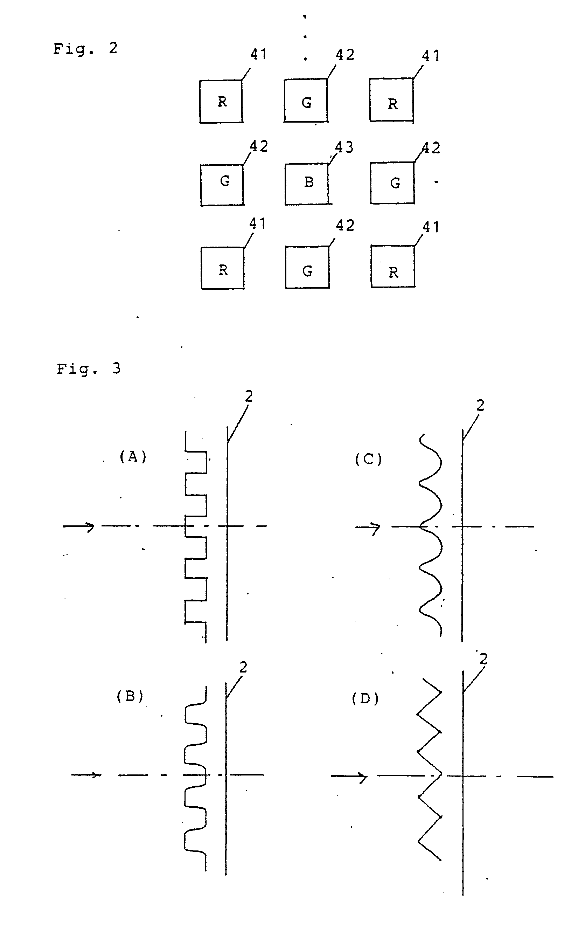

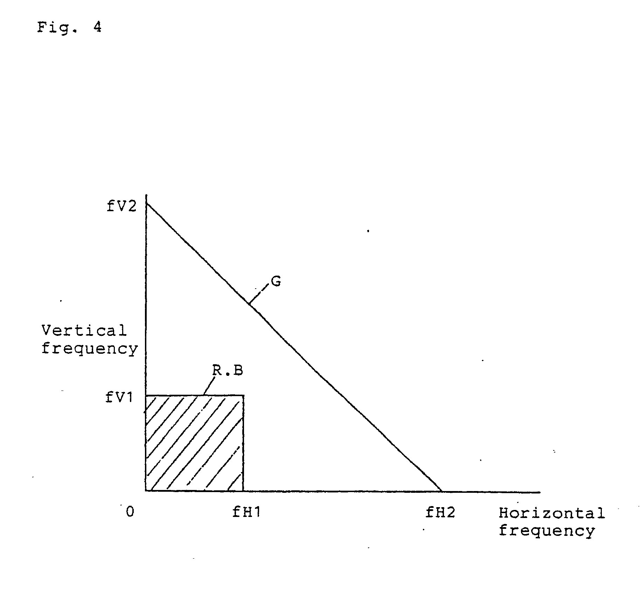

Fig. 2 shows a pixel arrangement of the color filter 4 of this embodiment. Similar to that shown in Fig. 6, moiré patterns of red and blue colors are generated at (fH2, 0) and (0, fV2). In this case, selective optical low-pass filter 2 shown in Fig. 3 (A), (B), (C) or (D) is used. When looked from the direction perpendicular to an optical axis, as shown in Fig. 3, the low-pass filter 2 is rectangular, trapezoidal, of surf-wave or triangular in shape which can be expressed as the sum of a fundamental wave component of sine wave and a higher harmonics component. In this case, it can be expressed in shape as a fundamental wave component of sine wave only. Also, in Fig. 1, the selective low-pass filter 2 has a shape which is irregular only in the one-dimensional direction, but it can be made in shape such as to be irregular in the two-dimensional directions. Phase filter 2 is made of resin or the like and a light is incident from the direction denoted by the arrow in Fig. 3. As a result, diffraction is taken place and the image of an object appeared on the solid state imaging device 5 is subjected to a spatial low-pass filtering process. Also, in the spatial low-pass filtering process by the phase filter 2, there exists a dependence on wavelength, so that it can be structured so as to cut selectively red and blue signal components only to pass the green signal component therethrough.

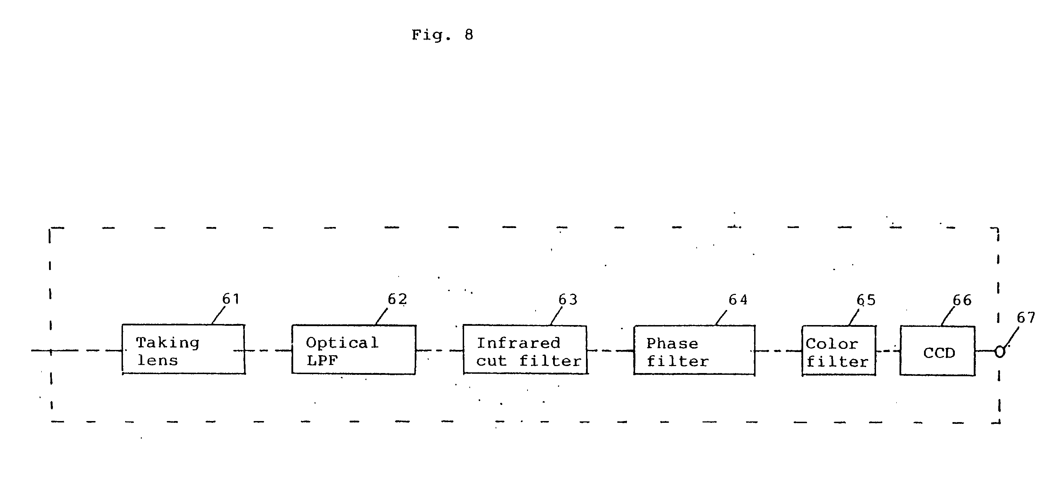

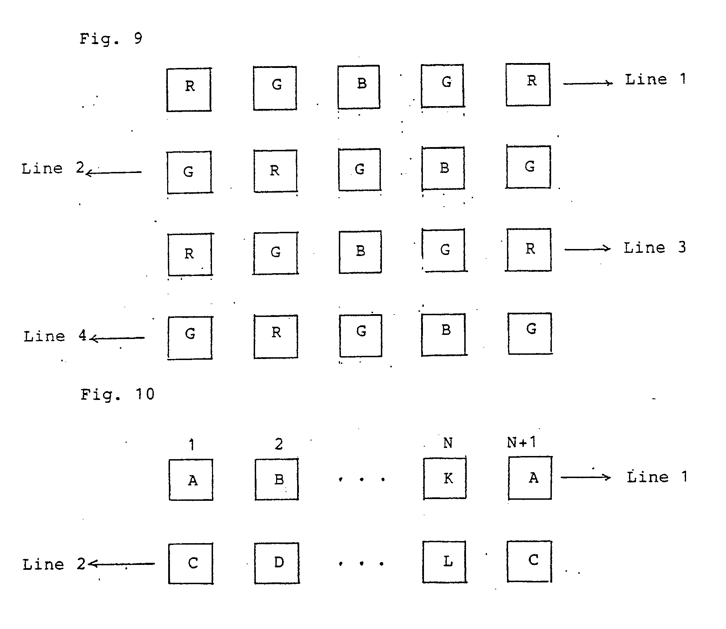

When the moiré patterns of red and blue colors generated at (fH2, 0) and (0, fV2) are selectively removed by using the selective optical low-pass filter 2, the red and blue signals each becomes to have the same frequency band as with the conventional one as exemplified above, but the horizontal frequency band and vertical frequency band of the green signal are possibly used up to fH2 and fV2, respectively. This means that the band of the green signal component largely contributable to the luminance signal can be widened and the resolution can be outstandingly improved. As the color selection optical low-pass filter, a phase grating may be used. In addition, since a moiré pattern of green and magenta colors is generated at (fH2, fV2), for this frequency component, a conventional quartz optical low-pass filter may be used combinedly with the color selection optical low-pass filter as shown in Fig. 8. That is, an incident light through a taking lens 61 is passed through a quartz optical low-pass filter 62 to remove the moiré pattern of green and magenta colors generated at (fH2, fV2), and then, sent to an infrared cut filter 63 to remove an infrared component therefrom. Next, the incident light thus processed is passed through a selective optical low-pass filter 64 to remove the moiré patterns of red and blue colors generated at (fH2, 0) and (0, fV2), then inputted through a color filter 65 to a solid state imaging device 66 to be converted to an electric signal, and outputted to an output terminal 67. Or, in this case, a color selection optical low-pass filter whose color selectivity is erased to do the low-pass filtering process uniformly to all wavelengths of an incident light can be combinedly used with a color selection optical low-pass filter whose color selectivity is not erased. In this embodiment, also, pixels for outputting green signal are arranged in an oblique lattice pattern, but when such pixels are arranged transversely in a single line pattern and pixels for outputting red signal and pixels for outputting blue signal are also arranged respectively transversely in a single line pattern in a shifted relation by one line from each other, the same effect can be obtained. With the primary color filter, this can be used for other pixel arrangement than those shown above. In addition, it can be used for the pixel arrangement of general-purpose complementary color filter. Or, as the pixel arrangement of a first line, it has a N-pixel repetitive pattern, as the pixel arrangement of a second line, it has a N-pixel repetitive pattern which is of the same as that of the first line, as the pixel arrangement of a third line, it has a N-pixel repetitive pattern which is different from that of the first line and as the pixel arrangement of a fourth line, it has a N-pixel repetitive pattern which is of the same as that of the third line. Therefore, it has a pixel arrangement such as to be repetitive with a period of four lines. For example, as shown in Fig. 9, pixel arrangement of each line has a repetitive pattern of four pixels of green, red, green and blue signals.

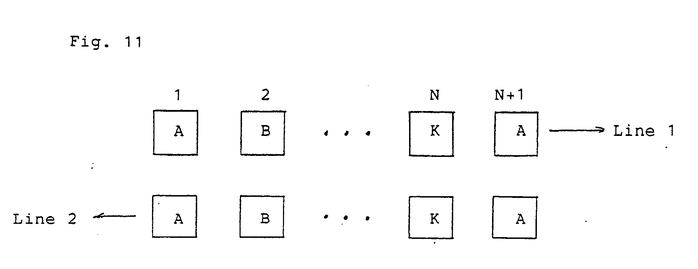

In addition, as shown in Fig. 10, the pixel arrangement of a L-th line has a N-pixel repetitive pattern and the pixel arrangement of a (L + 1)-th line has a N-pixel repetitive pattern different therefrom. Or, as shown in Fig. 11, the pixels arrangement of each line has a N-pixel repetitive pattern. With the above-mentioned pixel arrangements, the readout of pixel can be executed by adding those of lines on the upper and lower sides.

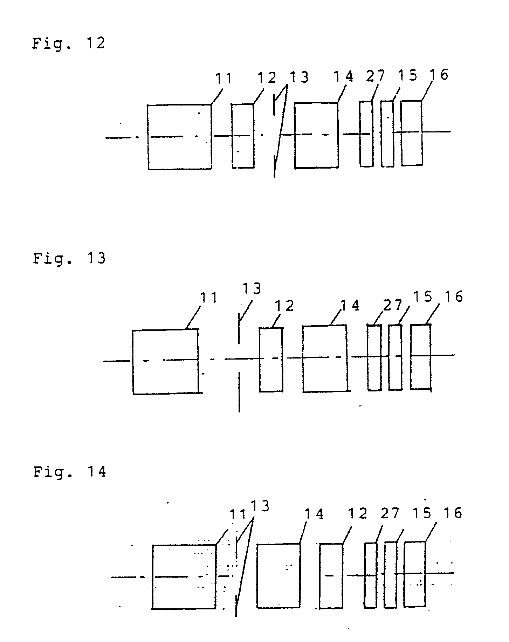

Arrangement of optical devices of a solid state imaging apparatus of this invention can be made, for example, as shown in Fig. 12 in which a first lens system 11, a selective optical low-pass filter 12, an iris means 13, a second lens system 14, an infrared cut filter 27, a color filter 15 and a solid state imaging device 16 are disposed successively in this order from direction that an incident light is inputted. It can be made, further for example, as shown in Fig. 13 in which a first lens system 11, an iris means 13, a selective low-pass filter 12, a second lens system 14, an infrared cut filter 27, a color filter 15 and a solid state imaging device 16 are disposed successively in this order form the direction that an incident light is inputted. Still further for example, it can be made as shown in Fig. 14 in which a first lens system 11, an iris means 13, a second lens system 14, a selective optical low-pass filter 12, an infrared cut filter 27, a color filter and a solid state imaging device 16 are disposed successively in this order from the direction to input an incident light.

Circuit structure of a solid state imaging apparatus of this invention will be exemplified below.

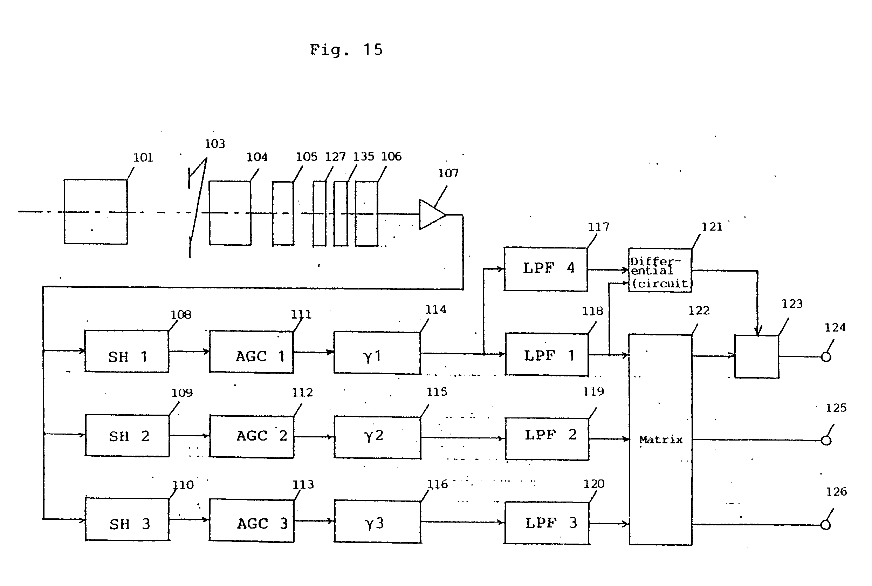

Fig. 15 is a block diagram of a circuit system including a solid state imaging apparatus of this invention.

In Fig. 15, an incident light inputted through a first taking lens 101 is subjected to controlling the quantity of light by an iris means 103, and inputted through a second taking lens 104 to a selective optical low-pass filter 105 to be subjected to low-pass filtering process for selectively filtering specific optical frequency components only. Next, the incident light thus processed is inputted to an infrared cut filter 127 to remove an infrared component therefrom, and then, inputted through a color filter 135 to a solid state imaging device 106 to be converted to an electric signal The output signal from the solid state imaging means 106 is delivered through a buffer 107 into three paths respectively to be inputted to a first sample holder 108, a second sample holder 109, and a third sample holder 110. The first sample holder 108 outputs a green signal, the second sample holder 109 outputs, for example, a red signal and the third sample holder 110 does, for example, a blue signal. The green signal outputted from the first sample holder 108 is controlled to a specific gain by a first automatic gain controller 111, then inputted to a first gamma correction circuit 114 to be subjected to the gamma correction and outputted. The red signal from the second sample holder 109 is controlled to a specific gain by a second automatic gain controller 112, then inputted to a second gamma correction circuit 115 to be subjected to the gamma correction and outputted. The blue signal from the third simple holder 110 is controlled to a specific gain by a third automatic gain controller 113, then inputted to a third gamma correction circuit 116 to be subjected to the gamma correction and outputted. The signal thus processed through the first gamma correction circuit 114 is deliverly inputted to a fourth low-pass filter 117 of broad band and a first low-pass filter 118 of narrow band. Fig. 4 shows a two-dimensional frequency characteristic showing the band of each of green, red and blue signals. In which, the pass band area of the first low-pass filter 118 is shadedly shown, and the pass band of the fourth low-pass filter 117 is within the triangular area obtained by connecting the original point, a point (fH2, 0) and a point (0, fV2). The output signal from the fourth low-pass filter 117 and one part of the output signal from the first low-pass filter 118 are sent to a differential means 121 to be outputted as a differential signal. The pass band of the differential means 121 becomes an area obtained by subtracting the shaded area from the pass band of the fourth low-pass filter 117 in Fig. 4. The other part of the output signal from the first low-pass filter 118 is inputted a matrix circuit 122. The signal outputted from the second gamma correction circuit 115 is inputted through a second low-pass filter 119 having the same pass band as that of the first low-pass filter 118 to the matrix circuit 122. In addition, the signal outputted from the third gamma correction circuit 116 is inputted through a third low-pass filter 120 having the same pass band as that of the first low-pass filter 118 to the matrix circuit 122, the inputted signals are converted into a luminance signal of narrow band, a first color difference signal of narrow band and a second color difference signal of narrow band. The output signal outputted as a differential signal from the differential means 121 and the luminance signal of narrow band thus converted are inputted to a mixer 123 and outputted as a luminance signal of broad band to a first output terminal 124. In this case, frequency band of the luminance signal thus inputted to the first output terminal 124 becomes equal to the pass band of the first low-pass filter 118. Also, the first color difference signal of narrow band thus converted is outputted to a second output terminal 125 and the second color difference signal of narrow band thus converted is outputted to a third output terminal 126. In the above explanation, a circuit construction based on the primary color imaging method is taken up, but the circuit construction of a solid state imaging apparatus of this invention can be used for the complementary color imaging method.

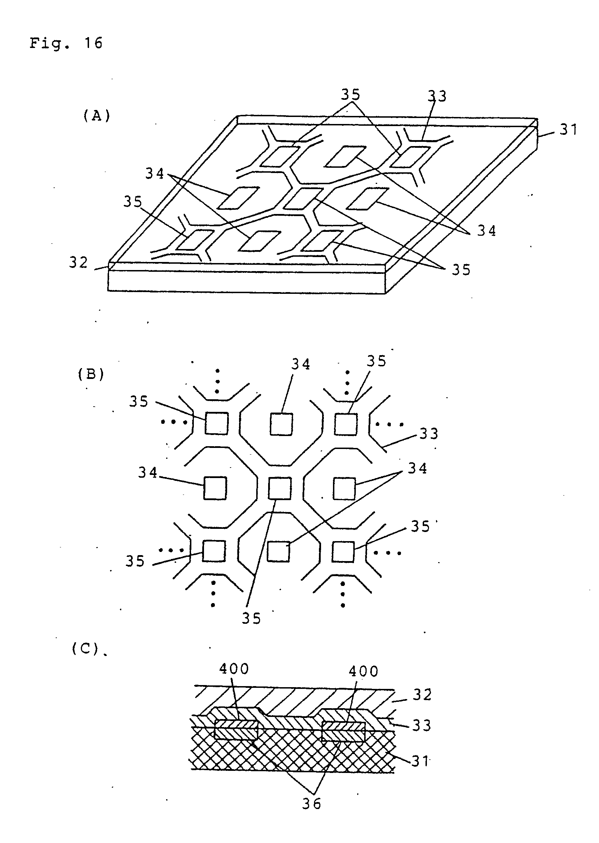

Fig. 16 (A) is a birds-eye view of a solid state imaging device showing another example of the solid stated imaging device 5 shown in Fig. 1. Fig. 16 (B) is a top view of the solid state imaging device 5 of this invention shown in Fig. 1. Fig. 16 (C) is a cross-sectional view of the solid state imaging device 5 in Fig. 6 (B). In Fig. 6 (A), the reference numeral 31 indicates a CCD substrate, 32 does a surface layer, 33 an optical waveguide, 34 a pixel for outputting a luminance signal, 35 a pixel for outputting a color signal, 400 a color filter and 36 an optical diode. The pixels 35 for outputting color signal are connected with each other. Each of the pixels 34 is disposed independently of pixels adjacent thereto. Since the optical diode 36 has incident lights including a light received from the directly overhead direction and four lights received via the optical diode 33 from the pixel disposed adjacently thereto, the photo-electric conversion is made for a light obtained by adding these incident lights, so that out of colors of the color filter, only a color which is used in a pixel connected to the optical waveguide 33 can be subjected to the selective low-pass filtering process.

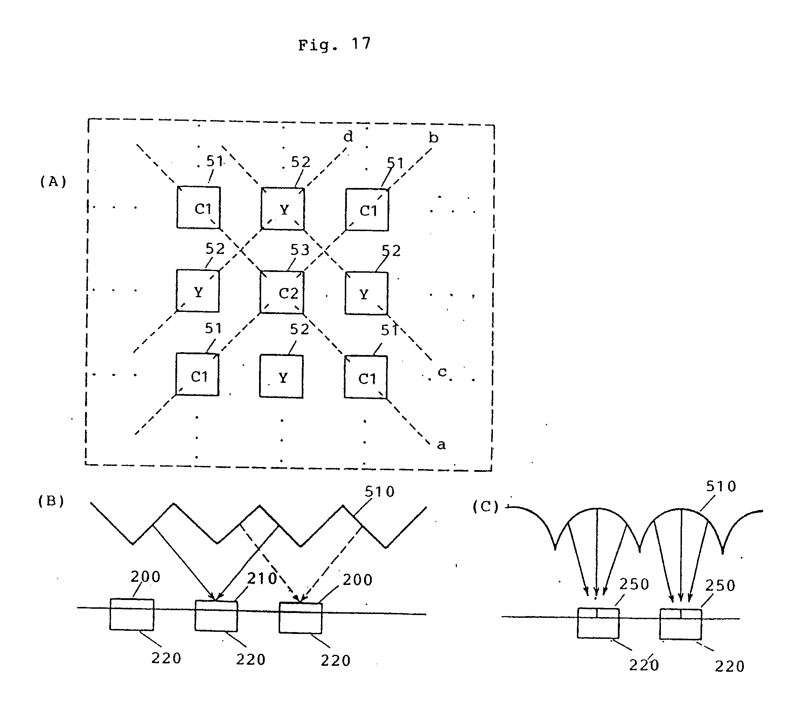

Fig. 17 shows a solid state imaging device showing further another example of the solid state imaging device 5 shown in Fig. 1. In Fig. 17(A), pixels 51 for outputting a first color signal C1 and pixels 53 for outputting a second color signal C2 are arranged in an oblique relation to each other and in remainder pixel lines, pixels 52 for outputting a luminance signal Y are arranged obliquely. For oblique arrangements of pixels for outputting luminance signal Y denoted by the broken lines c and d, the light-condensing process can be applied as shown in Fig. 17 (C). For oblique arrangements of pixels for outputting color signals C1 and C2 denoted by the broken lines a and b, an optical diffusion process is applied, so that it becomes a low-pass filtering process and a color component is selectively low-pass-filtered. In Fig. 17 (B), the reference numeral 510 indicates a surface-treated layer which is made of an optical diode covered with an optical element layer of resin or the like whose surface is machined in an irregular pattern. In line a of Fig. 17 (A), the surface treated layer 510 condenses a light from a pixel adjacent thereto, the optical low-pass filtering process is applied for this pixel arrangement. The reference numeral 200 indicates, for example, a red filter, 210 does, for example, a blue filter and 220 an optical diode. As shown above, optical low-pass filtering process is applied for red and blue signals only. On the other hand, if green filter 250 is disposed as shown in Fig. 17 (C), the light-condensing process is made for the green component from a single pixel only, resulting in an improvement in sensitivity.

Claims

1. An imaging apparatus comprising:
an taking lens;
a selective optical low-pass filter for selectively removing a specific optical frequency component only from an incident light inputted through said taking lens;
an infrared cut filter for removing an infrared component from an optical signal outputted from said selective optical low-pass filter;
a color filter for passing a specific color light only of an optical signal outputted from said infrared cut filter; and
a photo-electric converter for converting an optical signal outputted from said color filter into an electric signal.

2. An imaging apparatus as claimed in claim 1, wherein as said selective optical low-pass filter, a phase filter is used.

3. An imaging apparatus as claimed in claim 1, wherein said color filter has a repetitive pixel arrangement of four-line period such that a pixel arrangement of a first line has a N-pixel repetitive pattern, a pixel arrangement of a second line has a N-pixel repetitive pattern which is of the same as that of the first line, a pixel arrangement of a third line has a N-pixel repetitive pattern which is different from that of the first line, and a pixel arrangement of a fourth line has a N-pixel repetitive pattern which is of the same as that of the third line.

4. An imaging apparatus as claimed in claim 1, wherein each line of said color filter has a pixel arrangement of a repetitive pattern of four pixels comprising a pixel for outputting green signal, pixel for outputting red signal, another pixel for outputting green signal and pixel for outputting green signal and pixel for outputting blue signal.

5. An imaging apparatus as claimed in claim 1, wherein a L-th line of said color filter has a pixel arrangement of a N-pixel repetitive pattern and a (L + 1)-th line thereof has a pixel arrangement of a N-pixel repetitive pattern different from that of the L-th line.

6. An imaging apparatus as claimed in claim 1, wherein each line of said color filter has a pixel arrangement of a N-pixel repetitive pattern.

7. An imaging apparatus as claimed in claim 1, wherein said color filter has pixels for outputting green signal, pixels for outputting red signal and pixels for outputting blue signal arranged in an oblique lattice pattern with each other.

8. An imaging apparatus as claimed in claim 1, wherein said selective optical low-pass filter comprises a phase filter having a shape expressed as a sum of a fundamental frequency component of sine wave and a higher harmonic component and an arrangement adapted to obtain a transfer characteristic of wide frequency band.

9. An imaging apparatus as claimed in claim 1, wherein said selective optical low-pass filter comprises a phase filter having a shape expressed as a sum of a fundamental frequency component of sine wave and a higher harmonic component and an arrangement adapted to obtain a green signal of wide frequency band as well as to obtain red and blue signals each having a narrow frequency band.

10. An imaging apparatus comprising:
a taking lens;

an optical low-pass filter for removing unnecessary high frequency component from an incident light inputted through said taking lens;

an infrared cut filter for removing an infrared component from an optical signal outputted from said optical low-pass filter;

a selective optical low-pass filter for selectively low-pass filtering a specific optical frequency component only from an optical signal outputted from said infrared cut filter;

a color filter for passing a specific color light only of an optical signal outputted from said selective optical low-pass filter; and

a photo-electric converter for converting an optical signal outputted from said color filter into an electric signal.

11. An imaging apparatus as claimed in claim 10, wherein as said selective optical low-pass filter, a phase filter is used.

12. An imaging apparatus as claimed in claim 10, wherein said color filter has a repetitive pixel arrangement of four-line period such that a pixel arrangement of a first line has a N-pixel repetitive pattern, a pixel arrangement of a second line has a N-pixel repetitive pattern which is of the same as that of the first line, a pixel arrangement of a third line has a N-pixel repetitive pattern which is different from that of the first line, and a pixel arrangement of a fourth line has a N-pixel repetitive pattern which is of the same as that of the third line.

13. An imaging apparatus as claimed in claim 10, wherein each line of said color filter has a pixel arrangement of a repetitive pattern of four pixels comprising a pixel for outputting green signal, pixel for outputting red signal, another pixel for outputting green signal and pixel for outputting blue signal.

14. An imaging apparatus as claimed in claim 10, wherein a L-th line of said color filter has a pixel arrangement of N-pixel repetitive pattern and a (L + 1)-th line thereof has a pixel arrangement of a N-pixel repetitive pattern different from that of the L-th line.

15. An imaging apparatus as claimed in claim 10, wherein each line of said color filter has a pixel arrangement of a N-pixel repetitive pattern.

16. An imaging apparatus as claimed in claim 10, wherein said color filter has pixels for outputting green signal, pixels for outputting red signal and pixels for outputting blue signal arranged in an oblique lattice pattern with each other.

17. An imaging apparatus as claimed in claim 10, wherein said selective optical low-pass filter comprises a phase filter having a shape expressed as a sum of a fundamental frequency component of sine wave and a higher harmonic component and an arrangement adapted to obtain a transfer characteristic of wide frequency band.

18. An imaging apparatus as claimed in claim 10, wherein said selective optical low-pass filter comprises a phase filter having a shape expressed as a sum of a fundamental frequency component of sine wave and a higher harmonic component and an arrangement adapted to obtain a green signal of wide frequency band as well as to obtain red and blue signals each having a narrow frequency band.

19. An imaging apparatus comprising:

a taking lens;

an optical low-pass filter for removing unnecessary high frequency component of a green signal from an incident light inputted from said taking lens;

an infrared cut filter for removing an infrared component from an optical signal outputted from said optical low-pass filter;

a selective optical low-pass filter for selectively low-pass filtering red and blue signal frequency components only from an optical signal outputted from said infrared cut filter;

a primary color filter for passing primary colors of an optical signal outputted from said selective color low-pass filter; and

a photo-electric converter for converting an optical signal outputted from said primary color filter into an electric signal.

20. An imaging apparatus as claimed in claim 19, wherein as said selective low-pass filter, a phase filter is used.

21. An imaging apparatus as claimed in claim 19, wherein said primary color filter has a repetitive pixel arrangement of four-line period such that a pixel arrangement of a first line has a N-pixel repetitive pattern, a pixel arrangement of a second line has a N-pixel repetitive pattern which is of the same as that of the first line, a pixel arrangement of a third line has a N-pixel repetitive pattern which is different from that of the first line, and a pixel arrangement of a fourth line has a N-pixel repetitive pattern which is of the same as that of the third line.

22. An imaging apparatus as claimed in claim 19, wherein each line of said primary color filter has a pixel arrangement of a repetitive pattern of four pixels comprising a pixel for outputting green signal, pixel for outputting red signal, another pixel for outputting green signal and pixel for outputting blue signal.

23. An imaging apparatus as claimed in claim 19, wherein a L-th line of said primary color filter has a pixel arrangement of a N-pixel repetitive pattern and a (L + 1)-th line thereof has a N-pixel repetitive pattern different from that of the L-th line.

24. An imaging apparatus as claimed in claim 19, wherein each line of said primary color filter has a N-pixel repetitive pattern.

25. An imaging apparatus as claimed in claim 19, wherein said primary color filter has pixels for outputting green signal and pixels for outputting red signal and pixels for outputting blue signal arranged in an oblique lattice pattern with each other.

26. An imaging apparatus as claimed in claim 19, wherein said selective optical low-pass filter comprises a phase filter having a shape expressed as a sum of a fundamental frequency component of sine wave and a higher harmonic component and an arrangement adapted to obtain a transfer characteristic of wide frequency band.

27. An imaging apparatus as claimed in claim 19, wherein said selective optical low-pass filter comprises a phase filter having a shape expressed as a sum of a fundamental frequency component of sine wave and a higher harmonic frequency and a arrangement adapted to obtain a green signal of wide frequency band as well as to obtain red and blue signals each having a narrow frequency band.

28. An imaging apparatus comprising:

a first lens system;

a selective optical low-pass filter for selectively low-pass filtering a specific optical component only of an incident light inputted from said first lens system;

an iris means for controlling an optical signal outputted from said selective optical low-pass filter to a predetermined quantity of light;

a second lens system for condensing an optical signal outputted from said iris means;

an infrared cut filter for removing unnecessary infrared component from an optical signal outputted from said second lens system;

a color filter for passing a specific color signal of an optical signal outputted from said infrared cut filter; and

a photo-electric converter for converting an optical signal outputted from said color filter into an electric signal.

29. An imaging apparatus comprising:

a first lens system;

an iris means for controlling a quality of an incident light inputted from said first lens system to a predetermined value;

a selective optical low-pass filter for selectively low-pass filtering a specific optical frequency component only of an optical signal outputted from said iris means;

a second lens system for condensing an optical signal outputted from said selective optical low-pass filter;

an infrared cut filter for removing unnecessary infrared component from an optical signal outputted from said second lens system;

a color filter for passing a specific color signal of an optical signal outputted from said infrared cut filter; and

a photo-electric converter for converting an optical signal outputted from said color filter into an electric signal.

30. An imaging apparatus having such a structure that a first lens system, an iris means, a second lens system, a selective optical low-pass filter, an infrared cut filter, a color filter, and a photo-electric converter are respectively disposed on a same optical axis and an incident light inputted from said first lens system is controlled its quantity of light to a predetermined value through said iris means, passed through said second lens system, subjected to a low-pass filtering process selectively for a specific optical frequency component by said selective optical low-pass filter, then removed unnecessary infrared component therefrom by said infrared cut filter, and inputted through said color filter to said photo-electric converter thereby to be subjected to a photo-electric conversion.

31. An imaging apparatus comprising:

a taking lens;

a selective optical low-pass filter for selectively low-pass filtering a specific optical frequency component of an incident light inputted from said taking lens;

an infrared cut filter for removing an infrared component from an optical signal outputted from said selective optical low-pass filter;

a color filter for passing a specific color signal of an optical signal outputted from said infrared cut filter;

a photo-electric converter for converting an optical signal outputted from said color filter into an electric signal;

a buffer means for delivering an electric signal outputting from said photo-electric converter into three paths;

a first sample holder, second sample holder and third sample holder each for sample-holding a signal of each of the three paths;

a first gain controller for controlling an output signal from said first sample holder to a predetermined gain;

a first gamma correction means for gamma-correcting an output signal from said first gain controller;

a second gain controller for controlling an output signal from said second sample holder to a predetermined gain;

a second gamma correction means for gamma-correcting an output signal from said second gain controller;

a third gain controller for controlling an output signal from said third sample holder to a predetermined gain;

a third gamma correction means for gamma-correcting an output signal from said third gain controller;

a fourth low-pass filter of wide frequency band and a first low-pass filter of narrow frequency band each for passing an output signal from said first gamma correction means;

a differential means for outputting a differential signal between an output signal from said fourth low-pass filter and an output signal from said first low-pass filter;

a second low-pass filter of narrow frequency band for passing an output signal from said second gamma correction means;

a third low-pass filter of narrow frequency band for passing an output signal from said third gamma correction means;

a matrix circuit means for converting output signals from said first, second and third low-pass filters respectively into a luminance signal of narrow frequency band, a first color difference signal of narrow frequency band and a second color difference signal of narrow frequency band;

a mixer for mixing an output signal from said differential means and said luminance signal of narrow frequency band to output as a luminance signal of wide frequency band to a first output terminal;

a second output terminal for outputting said first color difference signal of narrow frequency band; and

a third output terminal for outputting said second color difference signal of narrow frequency band.

32. An imaging apparatus wherein by providing an optical waveguide between pixels of an imaging device for connection, a selective low-pass filtering process is carried out for color signals.

33. An imaging apparatus as claimed in claim 32, wherein a first member having a refractive index of N1 is disposed on and between the pixels for outputting color signals and a second member having a refractive index of N2 is disposed on said first member thereby to form an optical waveguide, thus being capable of arriving an incident light to each pixel at a pixel adjacent thereto as well.

34. An imaging apparatus wherein by giving an optical diffusion process function partially to the surface of an imaging device, a selective low-pass filtering process is carried out for color signals.

Fig. 1

Incident light

Camera circuit

EP 0 416 876 A2

Fig. 2

Fig. 3

Fig. 4

Fig. 5

```
┌──────────┐   ┌──────────────┐   ┌──────────────┐   ┌──────────┐   ┌────────┐
│ Taking   │   │ Quartz       │   │ Infrared     │   │Color     │   │        │
│ lens     │   │ optical LPF  │   │ cut filter   │   │filter    │   │  CCD   │
└──────────┘   └──────────────┘   └──────────────┘   └──────────┘   └────────┘
     21              22                  23              24            25
```

EP 0 416 876 A2

Fig. 6

Fig. 7

Horizontal frequency

Fig. 8

EP 0 416 876 A2

Fig. 9

| | | | | |
|---|---|---|---|---|
| R | G | B | G | R | → Line 1

Line 2 ← 
| | | | | |
|---|---|---|---|---|
| G | R | G | B | G |

| | | | | |
|---|---|---|---|---|
| R | G | B | G | R | → Line 3

Line 4 ←
| | | | | |
|---|---|---|---|---|
| G | R | G | B | G |

Fig. 10

| 1 | 2 | | N | N+1 |
|---|---|---|---|---|
| A | B | · · · | K | A | → Line 1

Line 2 ←
| C | D | · · · | L | C |

Fig. 11

Fig. 12

Fig. 13

Fig. 14

Fig. 15

Fig. 16

(A)

35  33

34

35

32

31

34

35

(B)

34  35

35

35

33

34

34

35

35

35

(C).

400  400

32

33

31

36

Fig. 17

(A)

(B)

(C)

EP 0 416 876 A2